# EUROPÄISCHE PATENTSCHRIFT

(11) **EP 3 307 414 B1**
(45) Veröffentlichungstag und Bekanntmachung des Hinweises auf die Patenterteilung: **01.09.2021**
(21) Anmeldenummer: 16717099.2
(22) Anmeldetag: 19.04.2016
(51) Int. Cl.: B01D 35/027, B01D 35/147, B01D 29/23

(54) **FILTERELEMENT**
FILTER ELEMENT
ÉLÉMENT FILTRANT

(30) Priorität: 09.06.2015 DE 102015007692
(43) Veröffentlichungstag der Anmeldung: 18.04.2018
(73) Patentinhaber: RT-Filtertechnik GmbH, 88048 Friedrichshafen (DE)
(72) Erfinder: BAUTZ, Marco, 88045 Friedrichshafen (DE); STEHLE, Gerhard, 78467 Konstanz (DE)
(74) Vertreter: Bartels und Partner, Patentanwälte
(86) Internationale Anmeldenummer: PCT/EP2016/000632
(87) Internationale Veröffentlichungsnummer: WO 2016/198137

(56) Entgegenhaltungen:
- WO-A1-2005/007267
- WO-A1-2010/060592
- WO-A1-2011/107262
- WO-A2-2014/165606

## Beschreibung

Die Erfindung betrifft ein Filterelement mit den Merkmalen im Oberbegriff von Anspruch 1.

Filterelemente dieser Art sind in einer Vielzahl von Ausgestaltungen und in unterschiedlichen Spezifikationen, wie Filterfeinheit, Filterfläche und anderen Parametern, im Stand der Technik bekannt. Solche Filterelemente werden für die Filterung von Verfahrensflüssigkeiten, Druckflüssigkeiten, wie Hydrauliköle, flüssige Kraft- und Schmierstoffe, zur Aufbereitung flüssiger Medien und dergleichen eingesetzt. Die Betriebssicherheit der zugehörigen Filtervorrichtungen, in denen die Filterelemente in Benutzung sind, hängt in ganz wesentlichem Maße davon ab, dass eingebaute oder bei nach bestimmten Betriebsphasen erfolgenden Austauschvorgängen neu eingesetzte Filterelemente genau den vorgegebenen Spezifikationen entsprechen. Eine verminderte oder gar fehlende Leistungsfähigkeit der mit ungeeigneten Filterelementen betriebenen Filtervorrichtungen, durch die es zu Betriebsstörungen oder gar zu Schäden kommen kann, führt insbesondere bei teuren technischen Anlagen zu erheblichen wirtschaftlichen Einbußen.

Die WO 2010/060592 A1 beschreibt ein gattungsgemäßes Filterelement, bestehend aus zwei Endkappen, zwischen denen sich ein Filtermaterial erstreckt, wobei die Endkappen voneinander unterschiedliche Anschlussgeometrien aufweisen für die Verbindung mit Drittbauteilen, wobei die jeweilige Endkappe einen Innen- und einen Außenrand, welche die Anschlussgeometrien bilden, aufweist, wobei zwischen die Ränder das Filtermaterial mit einem seiner freien Stirnseiten eingreift und wobei zumindest ein Teil der Ränder der einen Endkappe von den korrespondierend angeordneten Rändern der anderen Endkappe verschieden ist.

Weitere Filterelemente gehen aus der WO 2014/165606 A1, der WO 2005/007267 A1 und der WO 2011/107262 A1 hervor.

Im Hinblick auf diese Problematik liegt der Erfindung die Aufgabe zugrunde, ein Filterelement zur Verfügung zu stellen, das eine verbesserte Betriebssicherheit zugehöriger Filtervorrichtungen ermöglicht.

Gemäß dem Patentanspruch 1 ist diese Aufgabe erfindungsgemäß durch ein Filterelement gelöst, bei dem eine der Endkappen - von der jeweiligen Stirnseite aus gesehen - mit ihrem Innen- und/oder Außenrand unrund nämlich als Vieleck oder in der Art eines Gleichdicks oder Reuleaux-Polygons ausgebildet ist.

Die Endkappen weisen voneinander unterschiedliche Anschlussgeometrien für die Verbindung mit an jeweils zugehörigen Filtervorrichtungen befindlichen Drittbauteilen auf. Dergestalt bieten die Filterelemente einen sogenannten Verbauschutz, der sicherstellt, dass eine jeweilige Filtervorrichtung nur mit einem Filterelement betreibbar ist, das speziell für den jeweiligen Einsatzzweck vorgesehen ist, weil, in der Art eines Schlüssel/Schloss-Systems, die Fluid-Anschlussverbindung zwischen Filterelement und Filtervorrichtung nur herstellbar ist, wenn bei dem jeweils richtigen Filterelement die geometrische Übereinstimmung an den Anschlussbereichen der Endkappen gegeben ist.

Das angesprochene Reuleaux-Polygon kann vorteilhafterweise in Form eines Reuleaux-Dreiecks ausgebildet sein, das auf einem gleichseitigen Dreieck basiert, eine Formgebung, wie sie bei einem im Dokument WO 2012/ 034664 A1 offenbarten Filterelement am Mantelkörper des Filtermaterials vorgesehen ist.

Bei vorteilhaften Ausführungsbeispielen kann hierbei die eine Endkappe einen zylindrischen Innen- und Außenrand aufweisen, wobei Innen- und Außenrand zueinander koaxial verlaufen.

Die Anordnung kann dabei so getroffen sein, dass die andere Endkappe einen zylindrischen Außenrand und einen Reuleaux-dreieckförmigen Innenrand aufweist.

Bei besonders vorteilhaften Ausführungsbeispielen, bei denen die jeweilige Endkappe aus starrem Material gebildet ist, ist an diese jeweils eine umlaufende Dichtung aus Elastomermaterial angespritzt. Vorteilhafterweise kann hierbei so vorgegangen sein, dass durch das angespritzte Elastomer sowohl axiale als auch radiale Weichdichtungen gegenüber Festlegekeilen einer betreffenden Filtervorrichtung gebildet sind sowie eine Abdichtung gegenüber dem an der betroffenen Endkappe aufgenommenen Filtermaterial.

Hinsichtlich der Bauweise der Endkappen kann die Anordnung so getroffen sein, dass die andere der beiden Endkappen domartig ins Filterelement eingezogen ist und dass das Domende Fluiddurchtrittsstellen aufweist. Der über Fluiddurchtrittsstellen mit dem jeweiligen Filterhohlraum verbundene Innenraum des Doms ist in vorteilhafter Weise als Bauraum für den Einbau eines Bypassventils geeignet.

Gemäß dem Anspruch 8 ist Gegenstand der Erfindung auch eine Filtervorrichtung, die zwei Festlegeteile aufweist, die mittels eines perforierten Stützrohres miteinander verbunden und auf Abstand zueinander gehalten sind und der Aufnahme des Filterelements nach einem der vorstehenden Ansprüche als separatem Bauteil dienen.

Bei einer derartigen Filtervorrichtung kann die Anordnung mit Vorteil so getroffen sein, dass mittels eines weiteren Festlegeteils, das mit dem einen Festlegeteil, vorzugsweise mittels eines Bajonettverschlusses, verbindbar ist, das Filterelement unter der Einwirkung eines Energiespeichers gegen das andere Festlegeteil gedrückt ist. Mit besonderem Vorteil kann hierbei das andere Festlegeteil ein Bypassventil aufweisen.

Nachstehend ist die Erfindung anhand eines in der Zeichnung dargestellten Ausführungsbeispiels erläutert. Es zeigen:
- Fig. 1 und 2: verkürzt gezeichnete perspektivische Schrägansichten eines Ausführungsbeispiels des erfindungsgemäßen Filterelements, gesehen auf die obere Endkappe bzw. auf die untere Endkappe;
- Fig. 3: einen Querschnitt der unteren Endkappe mit polygonförmigem Verlauf des sich entlang der Innenseite der Faltung eines Filtermaterials erstreckenden Innenrandes;
- Fig. 4: einen verkürzt gezeichneten Längsschnitt des Ausführungsbeispiels des Filterelements;
- Fig. 5: einen Längsschnitt einer das Ausführungsbeispiel des Filterelements aufnehmenden Filtervorrichtung;
- Fig. 6: einen gegenüber Fig. 5 in größerem Maßstab gezeichneten Teillängsschnitt des unteren Endbereichs des in die Filtervorrichtung eingesetzten Filterelements;
- Fig. 7: einen im Maßstab von Figur 5 gezeichneten Teillängsschnitt des oberen Endbereichs des in die Filtervorrichtung eingesetzten Filterelements;
- Fig. 8 und 9: verkürzt gezeichnete perspektivische Schrägansichten des Ausführungsbeispiels des erfindungsgemäßen Filterelements mit zugehörigen, für den Einbau in die betreffende Filtervorrichtung vorgesehenen Festlegeteilen, gesehen auf das obere bzw. das untere Ende des Filterelements, und
- Fig. 10: einen verkürzten, schematisch vereinfacht gezeichneten Längsschnitt des Filterelements mit Festlegeteilen, jedoch ohne Bypassventil.

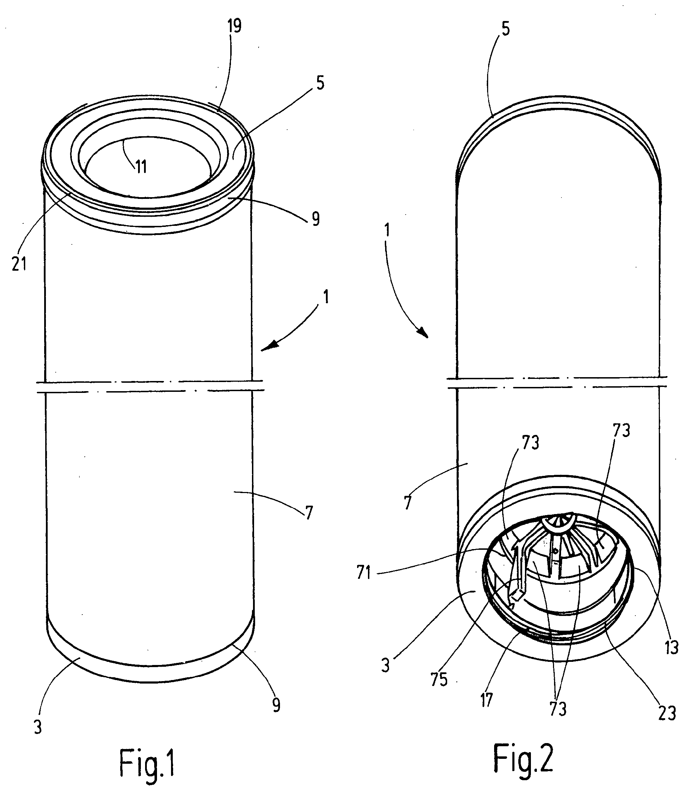

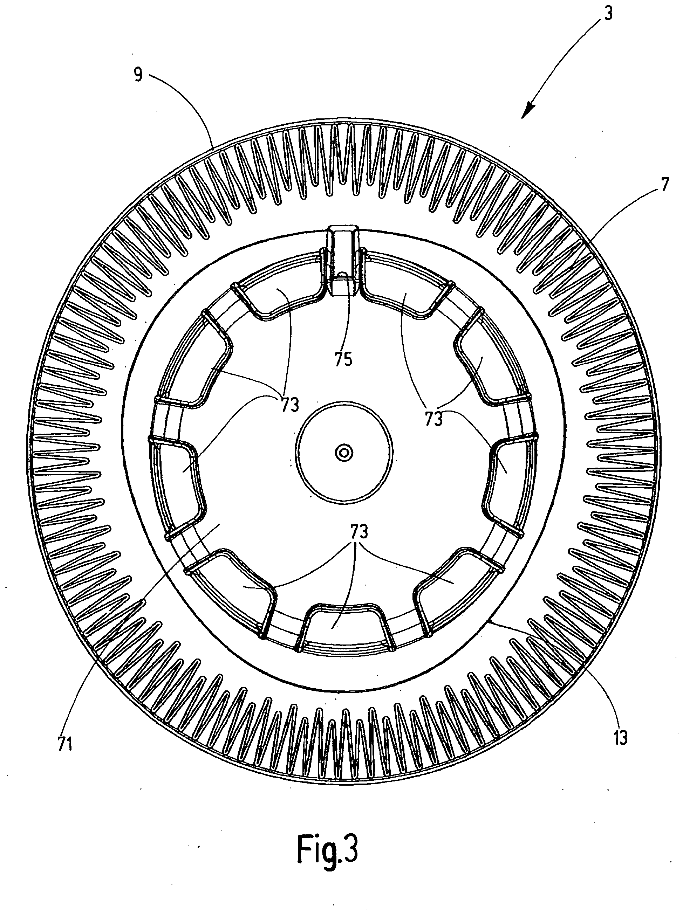

In den beigefügten Zeichnungen, von denen die Figuren 1 bis 4 ein Ausführungsbeispiel des erfindungsgemäßen Filterelements 1 in gesonderter Darstellung, d. h. ohne zugehörige Filtervorrichtung zeigen, sind eine untere Endkappe mit 3 und eine obere Endkappe mit 5 bezeichnet. Wie am deutlichsten in Figur 3 für die untere Endkappe 3 dargestellt, bilden die Endkappen 3, 5 die Einfassung für ein jeweiliges Ende eines einen Hohlzylinder bildenden Filtermaterials 7, beim vorliegenden Beispiel in Form eines gefalteten Mesh-Pack. Beide Endkappen 3 und 5 weisen einen kreiszylindrischen Außenrand 9 auf, an dem beim gezeigten Beispiel die Außenseite des Filtermaterials 7 anliegt. Das Filtermaterial 7 muss nicht zwingend an einem Rand der Endkappe 3, 5 anliegen. Während die obere Endkappe 5 auch einen kreiszylindrischen Innenrand 11 besitzt, weist die untere Endkappe 3, siehe Figur 3, einen Innenrand 13 in Form eines Polygons, beim gezeigten Beispiel in Form eines Reuleaux-Dreiecks, auf.

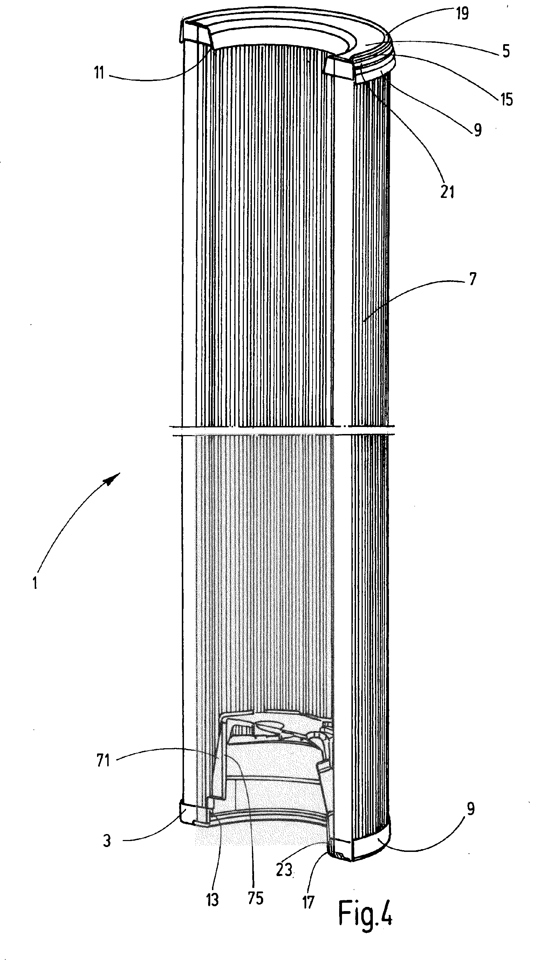

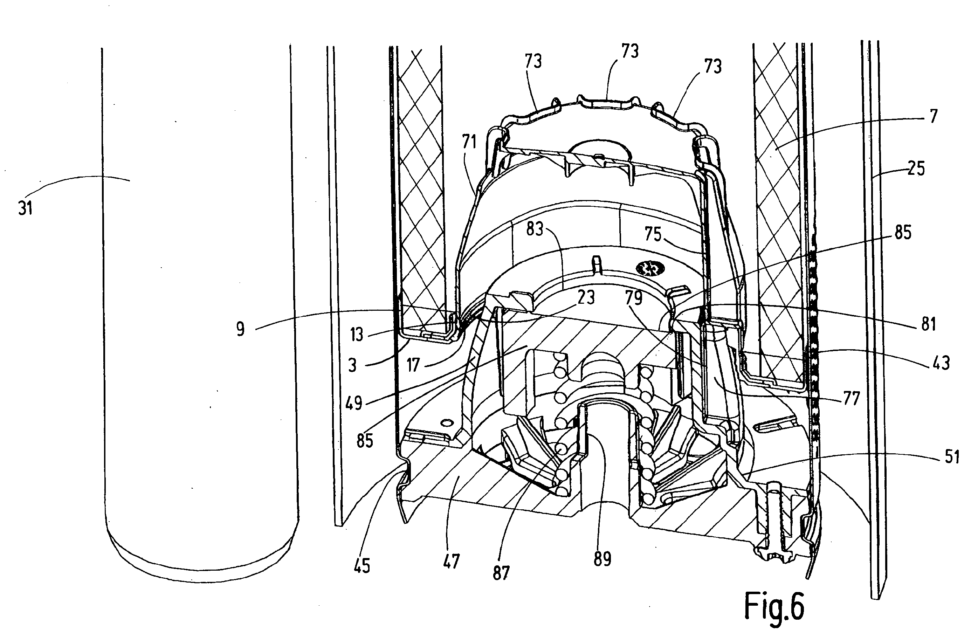

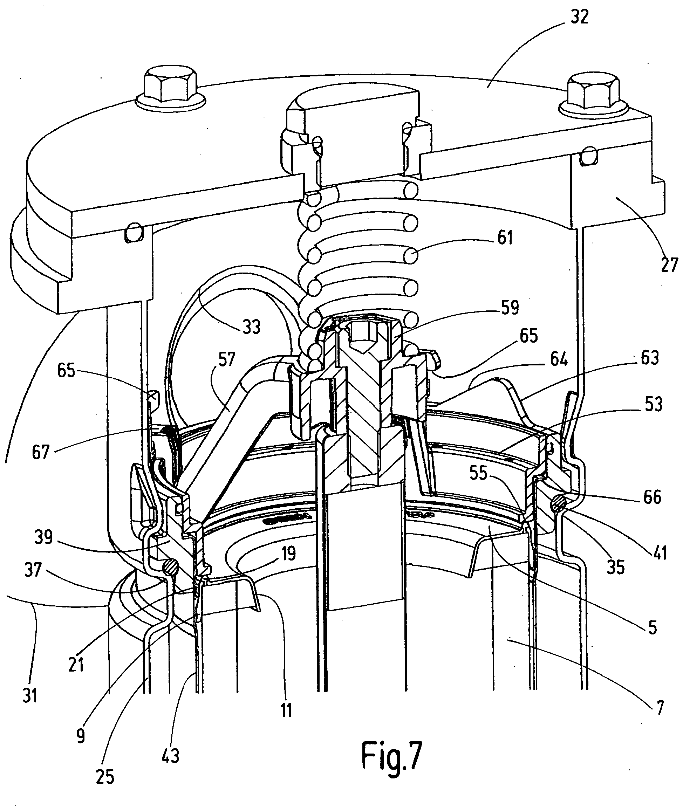

Beide Endkappen 3 und 5 weisen jeweils eine umlaufende Dichtung 17 bzw. 15, auf, die aus einem elastischen Material an den die Endkappe 3, 5 bildenden starren Werkstoff angespritzt ist. Wie die Figuren 1 und 4 zeigen, ist bei der oberen Endkappe 5 die Dichtung 15 derart angespritzt, dass sie sowohl eine axiale Dichtfläche 19 als auch eine radiale Dichtfläche 21 bildet. Bei der unteren Endkappe 3 ist die Dichtung 17 derart angespritzt, dass zumindest eine radiale Dichtkante 23 gebildet ist. Wie den die Einbausituation des Filterelements 1 in eine Filtervorrichtung zeigenden Figuren 6 und 7 deutlicher entnehmbar ist, dienen die Dichtflächen 19, 21 und 23 zur Bildung von Abdichtungen an den Festlegeteilen, mittels denen das Filterelement in der betreffenden Filtervorrichtung positionierbar ist.

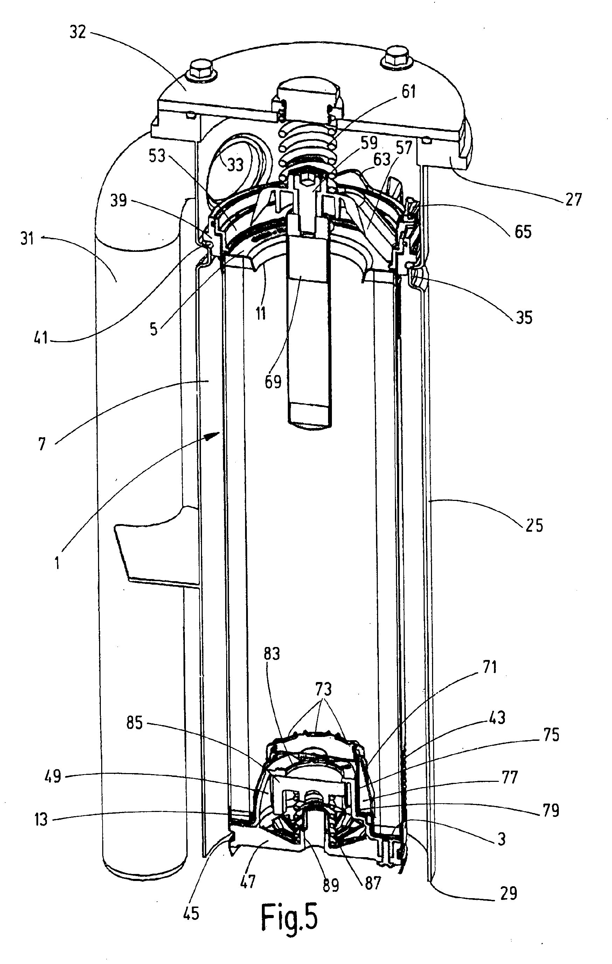

Das hier beschriebene Ausführungsbeispiel des Filterelements 1 ist für den Einsatz bei einer sogenannten In-Tank-Filtervorrichtung vorgesehen, die, siehe Figuren 5 bis 7 sowie 10, ein verhältnismäßig dünnwandiges, kreiszylinderförmiges Filtergehäuse 25 aufweist, das am oberen Ende ein Flanschteil 27 besitzt, mit dem es an einer oberen Tanköffnung (nicht dargestellt) derart befestigt ist, dass sich das untere offene Ende 29 des Gehäuses 25 in den Tank bis zu einer Höhe, die unter dem betrieblichen Fluidniveau liegt, erstreckt. Am oberen Ende ist das Gehäuse 25 mit einem mit dem Flansch 27 verschraubten Deckel 32 verschließbar. In geringem Abstand vom Flanschteil 27 mündet ein Zulaufrohr 31 über eine Einströmöffnung 33 in das Gehäuse 25. Unterhalb der Einströmöffnung 33 ist in der Wand des Filtergehäuses 25 eine Einbördelung 35 ausgebildet, die derart geformt ist, dass an einem radial eingezogenen Bereich eine Art Stufe oder Flanke 37 gebildet ist (Figur 7), an der ein gestufter Ringkörper 39 über eine Dichtung 41 gegen eine Axialbewegung nach unten abgestützt ist.

Der gestufte Ringkörper 39 ist, wie der Vergleich der Figuren 6 und 7 zeigt, mit einem perforierten Stützrohr 43 verbunden, an dem die Außenseite des Filtermaterials 7 anliegt und das sich bis zum unteren offenen Ende des Filtergehäuses 25 erstreckt. Wie Fig. 6 zeigt, ist am unteren Ende des Stützrohres 43 eine Einbördelung 45 vorgesehen, mittels der ein starres Bodenteil 47 mit dem Stützrohr 43 verbunden ist. Mit dem Ringkörper 39 und dem Bodenteil 47 bildet das Stützrohr 49 somit eine Art Innengehäuse für das von oben her einschiebbare Filterelement 1. Bei eingeschobenem Filterelement 1, wie in Figur 5 gezeigt ist, d. h. wenn das Filterelement 1 wie in Fig. 6 aus einer teilweise eingeschobenen Position axial nach unten bewegt wird, bildet das Bodenteil 47 zusammen mit einem mit ihm verschraubten Bypass-Ventilgehäuse 49 ein unteres Festlegeteil für die untere Endkappe 3 des Filterelements 1.

Zur Bildung einer Art Schlüssel/Schloss-System hat der Außenumfang des Bypass-Ventilgehäuses 49 im Anlage- oder Abdichtbereich 51 eine Polygonform, die dem Reuleauxdreieck am Innenrand 13 der Endkappe 3 entspricht, so dass die Dichtung 17 mit der radialen Dichtfläche 23 am Anschlussbereich der Endkappe 3 die Abdichtung am Abdichtbereich 51 des von Bodenteil 47 und Bypass-Ventilgehäuse 49 gebildeten Festlegeteiles ausbildet, siehe Figur 6. Bei fehlender Übereinstimmung der Polygonformen von Innenrand 13 der Endkappe 3 und Außenumfang des den Abdichtbereich 51 bildenden Bypass-Ventilgehäuses 49 als dem unteren Festlegeteil des Filterelements 1 ist ein Verbringen desselben in die eingefahrene Funktionsposition verhindert, so dass ein effektiver Verbauschutz gebildet ist, der der Inbetriebnahme eines unpassenden, für den Einsatzzweck ungeeigneten Filterelements, verhindert.

Als weiteres, drittes Festlegeteil, mittels dessen das Filterelement 1 in der eingebauten Funktionsposition am unteren, zweiten Festlegeteil, also dem Bodenteil 47 mit Bypass-Ventilgehäuse 49, gehalten ist, ist ein in den gestuften Innenumfang des das erste obere Festlegeteil bildenden Ringkörpers 39 eingreifender Haltering 53 vorgesehen, der eine der Innenseite des Ringkörpers 39 entsprechend gestufte Form besitzt und mit seinem inneren, unteren Endrand 55 an der Dichtfläche 19 der Endkappe 5 in seiner Funktionsstellung anliegt. Von der Innenseite des Halteringes 53 erstrecken sich einstückig Stege 57 in Radialrichtung nach innen und geneigt nach oben zu einem zentral gelegenen Federlager 59, an dem sich eine Druckfeder 61 abstützt, deren anderes Ende am Gehäusedeckel 32 anliegt und so den Haltering 53 axial nach unten vorspannt und in dieser Richtung hierfür bis zur maximal möglichen Anlage einer Stufe des Halteringes 53 an einer Stufe 66 des Ringkörpers 39 bewegt. Über die an der Außenseite des Halterings 53 gebildete Stufe ist dadurch der das obere Festlegeteil bildende Ringkörper 39 und damit das mit dem Stützrohr 43 gebildete Innengehäuse am äußeren Filtergehäuse 25 festgelegt, wobei der Dichtring 41 die Abdichtung bildet. Gleichzeitig positioniert der Endrand 55 des Halterings 53 in Anlage an der Dichtfläche 19 der Endkappe 5 das Filterelement 1 am unteren Festlegeteil unter der Wirkung der Federkraft der Druckfeder 61.

Die Stufe 66 am Ringkörper 39 dient des Weiteren der Anlage des Stützrohres 43 an seinem oberen freien Ende, das zu diesem Zweck nach außen in einem rechten Winkel umgelegt ist. Des Weiteren weist das Stützrohr 43 unterhalb des Ringkörpers 39 eine nach außen weisende Umfangsbördelung auf, so dass das Stützrohr 43 definiert am Ringkörper 39 ober- und unterhalb desselben festgelegt ist und mit diesem insoweit eine Funktionseinheit bildet, in die das Filterelement 1 einsetzbar, insbesondere hineinstellbar ist.

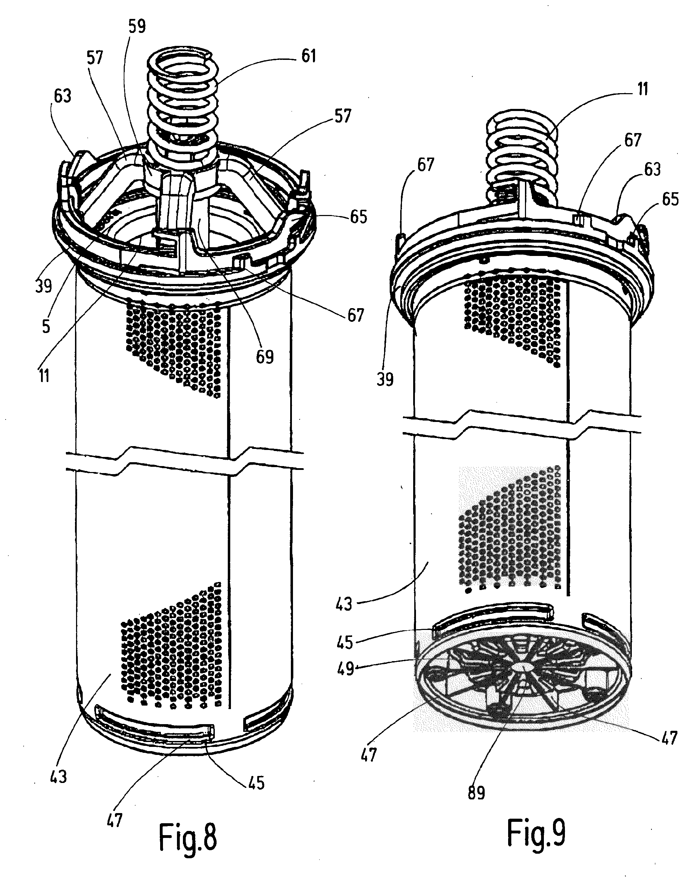

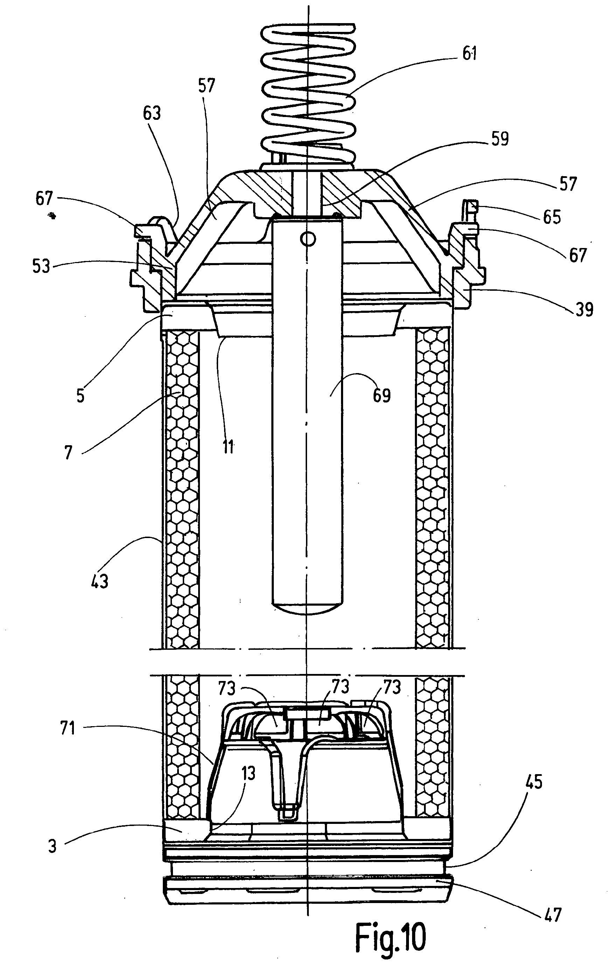

Wie am deutlichsten aus Figuren 7 bis 10 ersichtlich ist, ist am oberen Umfangsrand des Ringkörpers 39 eine umlaufende Nockenbahn 63 vorgesehen, die sich mit mehreren Flanken 64 außerhalb des Bereichs von Rast- oder Riegelhaken 65 erstreckt, die sich an die Nockenbahn 63 nach oben vorstehend anschließen. Zusammen mit Nasen 67 (Fig. 10), die von der Oberseite des Halteringes 53 radial nach außen vorspringen, ist dadurch bei einer Drehbewegung des Halterings 53 entlang der Nockenbahn 63 mittels der Stege 57 eine Art Bajonettverschluss zwischen dem Ringkörper 39 als erstem Festlegeteil und dem Haltering 53 als zweitem, oberen Festlegeteil ausbildbar.

Die Festlegestege 57 sind somit einstückig mit dem Haltering 53 verbunden, und jedem Festlegesteg 57 ist eine Nase 67 (Fig. 10) zugeordnet, die sich durch Drehen des Halteringes 53 über die Festlegestege 57 von Hand und entgegen dem Uhrzeigersinn in die seitlich zugewandten Öffnungen des jeweils zuordenbaren Riegelhakens 65 einfahren lässt. D.h., jeder vorhandene Nase 67 ist auch ein Riegelhaken 65 zugeordnet, die vorzugsweise diametral zur Längsachse der Filtervorrichtung angeordnet sich in gleichmäßigen radialen Abständen voneinander am Haltering 53 befinden.

Insbesondere sind drei Festlegestege 57 nebst Nasen 67 und Riegelhaken 65 vorhanden. Die einzelnen Festlegestege 57 sind in ihrer Mitte über eine in der Einbaustellung horizontal verlaufende Platte einstückig miteinander verbunden und aufgrund der Kraft der Druckfeder 61, die sich im Einbauzustand unter Vorspannung am Tank-Gehäusedeckel 32 an dessen Innenseite abstützt, wird gemäß der Darstellung nach der Fig. 10 der Haltering 53 nach unten gedrückt, und die untere Stirnseite des Halteringes 53 drückt dann weiter gegen den elastisch nachgiebigen Dichtring 15 der oberen, starren Endkappe 5. Für diesen Andrückeffekt ist es jedenfalls notwendig, dass ein geringes axiales Spiel zwischen der stufenseitigen Verbreiterung des Halteringes 53 gegenüber der Stufe 66 des Ringkörpers 39 nebst umgelegtem, perforiertem Stützrohres 43 verbleibt. Des Weiteren ist gemäß der Darstellung nach der Fig. 7 auf den einander zugewandten Stirnseiten von Haltering 53 mit Ringkörper 39 in einer Radialausnehmung des Ringkörpers 39 an seinem oberen Ende noch ein umlaufender Dichtring. Gleichzeitig wird bei der genannten Bewegung nach unten über das starre Filterelementmaterial 7 des Filterelementes 1 auch die untere starre Endkappe 3 mit bewegt, und der Dichtring 17 mit seiner elastisch nachgiebigen Dichtkante 23 kommt in dichtende Anlage mit der Außenseite des Bypass-Ventilgehäuses 49. Dergestalt wird also über die Druckfeder 61 das Filterelement 1 im Stützrohrgehäuse 43 derart festgelegt, dass die innere Unfiltratseite von der äußeren Filtratseite unter Zwischenschalten des fluiddurchlässigen, plissierten Filterelementmaterials 7 in ansonsten abgedichteter Weise separiert ist. Wird der Gehäusedeckel 32 gelöst, entspannt sich die Druckfeder 61, und die Nasen 61 fahren in der freien Riegelöffnung der Riegelhaken 65 unter der Vorspannung der Dichtringe 15, 17 an den Endkappen 5 bzw. 3 nach oben (nicht dargestellt). Dergestalt lässt sich der Haltering 53 mit seiner Stufe von dem Ringkörper 39 in axialer Richtung nach oben entfernen. Durch eine anschließende einfache Drehbewegung von Hand, nunmehr im Uhrzeigersinn, kommen die Verrastungsnasen 65 außer Eingriff mit den zugeordneten, die Nase jeweils übergreifenden Riegelhaken 65 und fahren dann anschließend in weiterer Drehbewegung im Bedarfsfall die benachbarten Nocken 64 der Nockenbahn 63 an, was zur Folge hat, dass der Haltering 53 in axialer Richtung gesehen einer Art Zwangsbewegung folgt, so dass der Haltering 53 vom Ringkörper 39 sich weiter entfernt, der nach wie vor als Bestandteil des Gehäuses 25 in demselben verbleibt. Ist der Haltering 53 völlig aus dem Gehäuse 25 entfernt, lässt sich das Filterelement 1 aus dem Stützrohrgehäuse 43 von Hand herausnehmen, was beispielsweise notwendig ist, wenn ein verschmutztes Altelement gegen ein unverbrauchtes Neuelement zu tauschen ist. Die Nocken 64 der Nockenbahn 63 dienen also insoweit als Ausbauhilfe für das Filterelement 1. Wie die Figuren 5 und 7 weiter zeigen, ist am Federlager 59 ein Permanentmagnetstab 69 angebracht, der sich von dort in Axialrichtung ins Innere des Filterelements 1 erstreckt.

Wie am deutlichsten den Figuren 2 und 6 entnehmbar ist, weist die untere Endkappe 3 von dem polygonförmig verlaufenden Innenrand 13 ausgehend einen Innenkörper in Form eines Doms 71 auf, der sich axial in den inneren Filterhohlraum erstreckt und an seinem oberen Ende einen Kranz von Fluiddurchtrittsstellen 73 aufweist. An der Innenseite bildet der Dom 71 durch einen eingezogenen Wandbereich eine sich in Axialrichtung erstreckende Leiste 75. Das Bypass-Ventilgehäuse 49, das sich bei der eingeschobenen Funktionsposition des Filterelements 1 in den Dom 71 erstreckt, hat eine der Innenform des Doms 71 entsprechende Außenform und weist an der Außenseite eine nutartige Wandvertiefung 77 auf, die, siehe Figur 6, eine Gleitfläche 79 bildet, entlang der die Leiste 75 des Doms 71 geführt ist, wenn das Filterelement 1 aus der in Figur 6 gezeigten Anfangsposition nach unten in die Funktionsposition eingeschoben wird. Die Leiste 75 bildet daher in Zusammenwirkung mit der Gleitfläche 79 an der Vertiefung 77 des Bypass-Ventilgehäuses 49 eine Drehpositionierung, welche das Polygon am Innenrand 13 der Endkappe 3 in Kongruenz zur Polygonform am Abdichtbereich 51 des Bypass-Ventilgehäuses 49 ausrichtet. Letzteres bildet am Innenrand 81 einer oberen Gehäuseöffnung 83 einen Ventilsitz für die Anlage eines Ventilkörpers 85 des Bypassventils. Der Ventilkörper 85 ist durch eine Ventilfeder 87 vorgespannt, die auf einem am Bodenteil 47 befindlichen Stutzen 89 sitzt. Ferner bildet die Außenwand des Ventilgehäuses 49 den Dichtsitz bei eingebautem Filterelement 1 mit dem unteren Dichtring 17 mit umlaufender Dichtkante 23 der unteren Endkappe 3 aus.

Beim Filtrierbetrieb des Filterelements 1 in der gezeigten In-Tank-Filtervorrichtung strömt das Fluid über die Einströmöffnung 33 an der Vorderseite des Filterelements 1 ein und gelangt über die Öffnung am Innenrand 11 der Endkappe 5 in den die Roh- oder Unfiltratseite bildenden, inneren Filterhohlraum. Nach Durchströmen des Filtermaterials 7 von innen nach außen zur Rein- oder Filtratseite im Raum zwischen dem Stützrohr 43 und der Gehäusewand 25 tritt das Filtrat am offenen, unteren Ende des Gehäuses 25 in den Tank aus. Es versteht sich, dass das Filterelement 1 nicht nur bei einer In-Tank-Filtervorrichtung vorteilhaft anwendbar ist, sondern bei Filtervorrichtungen jeglicher Art, bei denen korrespondierende Festlegeteile für Anschlüsse mit Endkappen vorgesehen sind, die am Filterelement eine spezielle unrunde Formgebung besitzen.

Während vorliegend ein Reuleaux-Polygon gezeigt ist, bei dem sich die Polygonform an der unteren Endkappe 3 befindet und der Anschlussbereich der oberen Endkappe 5 kreiszylindrisch ist, könnten beide Endkappen 3 und 5 mit einer Polygonform versehen sein, die voneinander unterschiedlich ist, oder es könnte die untere Endkappe 3 eine kreiszylindrische Anschlussgeometrie besitzen, während die Polygonform an der oberen Endkappe 5 vorgesehen ist. Anders als beim vorliegenden Beispiel könnte die polygonförmige Anschlussgeometrie nicht am Innenrand 13 an der Endkappe 3 vorgesehen sein, sondern könnte an einem Außenrand einer oder beider Endkappen oder auch bei einer Endkappe am Innenrand und bei der jeweils anderen Endkappe an ihrem Außenrand vorgesehen sein. Ferner könnten Endkappen mit charakteristischen, voneinander abweichenden Mehreckform eingesetzt werden.

## Patentansprüche

1. Filterelement, bestehend aus mindestens zwei Endkappen (3, 5), zwischen denen sich ein Filtermaterial (7) erstreckt, wobei die Endkappen (3, 5) voneinander unterschiedliche Anschlussgeometrien (11, 13) aufweisen für die Verbindung mit Drittbauteilen (47, 49), wobei die jeweilige Endkappe (3, 5) einen Innen- (11, 13) und einen Außenrand (9) aufweist, wobei zwischen die Ränder das Filtermaterial (7) mit einem seiner freien Stirnseiten eingreift, und wobei zumindest ein Teil (13) der Ränder (9, 11, 13) der einen Endkappe (3) von den korrespondierend angeordneten Rändern (9, 11) der anderen Endkappe (5) verschieden ist, **dadurch gekennzeichnet, dass** eine der Endkappen (3) - von der jeweiligen Stirnseite aus gesehen - mit ihrem Innen- (13) und/oder Außenrand unrund nämlich als Vieleck oder in der Art eines Gleichdicks oder Reuleaux-Polygons ausgebildet ist.

2. Filterelement nach Anspruch 1, **dadurch gekennzeichnet, dass** die eine Endkappe (5) einen zylindrischen Innen- (11) und Außenrand (9) aufweist, die zueinander koaxial verlaufen.

3. Filterelement nach Anspruch 1 oder 2, **dadurch gekennzeichnet, dass** die andere Endkappe (5) einen zylindrischen Außenrand (9) und einen reuleaux-dreieckförmigen Innenrand aufweist.

4. Filterelement nach einem der vorstehenden Ansprüche, **dadurch gekennzeichnet, dass** die jeweilige Endkappe (3, 5) aus starrem Material gebildet ist.

5. Filterelement nach einem der vorstehenden Ansprüche, **dadurch gekennzeichnet, dass** an mindestens eine der beiden Endkappen (3, 5) jeweils eine umlaufende Dichtung (15, 17) aus Elastomermaterial angespritzt oder an diese Endkappe angelegt ist.

6. Filterelement nach einem der vorstehenden Ansprüche, **dadurch gekennzeichnet, dass** die andere (3) der beiden Endkappen (3, 5) domartig (71) ins Innere des Filterelements (1) eingezogen ist und dass das Domende Fluiddurchtrittsstellen (73) aufweist.

7. Filtervorrichtung mit zwei Festlegeteilen (39, 47), die mittels eines perforierten Stützrohres (43) miteinander verbunden und auf Abstand zueinander gehalten sind und der Aufnahme des Filterelements (1) nach einem der vorstehenden Ansprüche als separatem Bauteil dienen.

8. Filtervorrichtung nach Anspruch 7, **dadurch gekennzeichnet, dass** mittels eines weiteren Festlegeteils (53), das mit dem einen Festlegeteil (39), vorzugsweise mittels eines Bajonettverschlusses (65, 67), verbindbar ist, unter der Einwirkung eines Energiespeichers (61) das Filterelement (1) gegen das andere Festlegeteil (47) gedrückt ist.

9. Filtervorrichtung nach Anspruch 7 oder 8, **dadurch gekennzeichnet, dass** das andere Festlegeteil (47) ein Bypassventil (49) aufweist.

## Claims

1. Filter element, consisting of at least two end caps (3, 5), between which a filter material (7) extends, wherein the end caps (3, 5) have connection geometries (11, 13) which differ from each other for connecting to third components (47, 49), wherein the respective end cap (3, 5) has an inner edge (11, 13) and an outer edge (9), wherein the filter material (7) engages between the edges with one of its free end faces, and wherein at least one part (13) of the edges (9, 11, 13) of the one end cap (3) differs from the correspondingly arranged edges (9, 11) of the other end cap (5), **characterised in that** one of the end caps (3) - viewed from the respective end face - is formed with its inner (13) and/or outer edge non-circular, i.e. as a polygon or in the manner of a curve of constant width or Reuleaux polygon.

2. Filter element according to claim 1, **characterised in that** the one end cap (5) has a cylindrical inner (11) and outer edge (9) which are coaxial to each other.

3. Filter element according to claim 1 or 2, **characterised in that** the other end cap (5) has a cylindrical outer edge (9) and a Reuleaux-triangle-shaped inner edge.

4. Filter element according to one of the preceding claims, **characterised in that** the respective end cap (3, 5) is composed of rigid material.

5. Filter element according to one of the preceding claims, **characterised in that** a circumferential seal (15, 17) made of elastomer material is injection moulded in each case onto at least one of the two end caps (3, 5) or is applied to this end cap.

6. Filter element according to one of the preceding claims, **characterised in that** the other (3) of the two end caps (3, 5) is recessed into the interior of the filter element (1) in a dome-like manner (71) and that the end of the dome has fluid passage points (73).

7. Filter device having two fixing parts (39, 47) which are connected to each other and kept at a distance from each other by means of a perforated supporting tube (43) and serve to accommodate the filter element (1) according to one of the preceding claims as a separate component.

8. Filter device according to claim 7, **characterised in that**, by means of a further fixing part (53), which can be connected, preferably by means of a bayonet coupling (65, 67), to the one fixing part (39), the filter element (1) is pressed against the other fixing part (47) under the action of an energy accumulator (61).

9. Filter device according to claim 7 or 8, **characterised in that** the other fixing part (47) has a bypass valve (49).

## Revendications

1. Elément de filtre, constitué d'au moins deux coiffes (3, 5) d'extrémité, entre lesquelles s'étend un matériau (7) filtrant, dans lequel les coiffes (3, 5) d'extrémité ont des géométries (11, 13) de raccordement différentes l'une de l'autre pour la liaison à des pièces (47, 49) tierces, dans lequel la coiffe (3, 5) d'extrémité respective a un bord (11, 13) intérieur et un bord (9) extérieur, dans lequel le matériau (7) filtrant pénètre entre les bords par l'un de ses côtés frontaux libres et dans lequel au moins une partie (13) des bords (9, 11, 13) de la une coiffe (3) d'extrémité est différente des bords (9, 11) disposés de manière correspondante de l'autre coiffe (15) d'extrémité, **caractérisé en ce que** l'une des coiffes (3) d'extrémité - considérée depuis le côté frontal respectif - est constituée en ayant son bord intérieur (13) et/ou extérieur non circulaire, à savoir sous la forme d'un polygone ou à la manière d'un orbiforme ou d'un polygone de Reuleaux.

2. Elément de filtre suivant la revendication 1, **caractérisé en ce que** la une coiffe (5) d'extrémité a un bord (11) intérieur et un bord (9) extérieur cylindrique, qui s'étendent co-axialement l'un à l'autre.

3. Elément de filtre suivant la revendication 1 ou 2, **caractérisé en ce que** l'autre coiffe (5) d'extrémité a un bord (9) extérieur cylindrique et un bord intérieur en triangle de Reuleaux.

4. Elément de filtre suivant l'une des revendications précédentes, **caractérisé en ce que** la coiffe (3, 5) d'extrémité respective est en un matériau rigide.

5. Elément de filtre suivant l'une des revendications précédentes, **caractérisé en ce que** sur au moins l'une des deux coiffes (3, 5) d'extrémité est injectée ou est appliquée à cette coiffe d'extrémité respectivement une étanchéité (15, 17) faisant le tour en matière élastomère.

6. Elément de filtre suivant l'une des revendications précédentes, **caractérisé en ce que** l'autre (3) des deux coiffes (3, 5) d'extrémités est tirée à la manière d'un dôme (71) à l'intérieur de l'élément (1) de filtre et **en ce que** l'extrémité en dôme a des coins (73) de passage de fluide.

7. Installation de filtration ayant deux parties (39, 47) fixes, qui sont reliées entre elles au moyen d'un tuyau (43) d'appui perforé et qui sont maintenues à distance l'une de l'autre et qui servent à la réception en tant que pièce distincte de l'élément (1) de filtre suivant l'une des revendications précédentes.

8. Installation de filtration suivant la revendication 7, **caractérisée en ce qu'**au moyen d'une autre partie (53) de fixation, qui peut être reliée à une partie (39) de fixation, de préférence au moyen d'une fermeture (65, 67) à baïonnette, l'élément (1) de filtre est repoussé sur l'autre partie (47) de fixation sous l'effet d'un accumulateur (61) d'énergie.

9. Installation de filtration suivant la revendication 7 ou 8, **caractérisée en ce que** l'autre partie (47) de fixation a une soupape (49) de dérivation.
